Europäisches Patentamt

European Patent Office

Office européen des brevets

(11) Numéro de publication: **0 422 983 A1**

## (12) DEMANDE DE BREVET EUROPEEN

(21) Numéro de dépôt: 90402698.6

(22) Date de dépôt: 28.09.90

(51) Int. Cl.⁵: **B25J 9/00, B25J 19/00, B25J 9/04, B65G 61/00**

(30) Priorité: 02.10.89 FR 8912836

(43) Date de publication de la demande:
17.04.91 Bulletin 91/16

(84) Etats contractants désignés:
BE DE DK ES GB GR IT LU NL

(71) Demandeur: VEGA AUTOMATION
Troyes Aéroport, Barberey Saint Sulpice
F-10600 La Chapelle Saint Luc(FR)

(72) Inventeur: **Boisseau, Jean-Louis**
5 rue des Vaucelles, Courgerennes
F-10800 Bucheres(FR)

(74) Mandataire: **Derambure, Christian et al**
**BUGNION ASSOCIES 55, rue Boissonade**
F-75014 Paris(FR)

(54) **Robot.**

(57) Robot à structure cylindrique à axes de rotation verticaux comprenant une embase (1) d'appui au sol; une colonne (2) montée à pivotement autour d'un axe (4) ; un organe support de liaison et d'entrainement (6) souple et inextensible, fermé en boucle , monté sur et le long de la colonne (2) ; un chariot (11) fixé à un des tronçons verticaux (9, 10) de l'organe (6) ; une potence (12) horizontale montée sur le chariot (11) à pivotement autour d'un axe (15); une tête (16) montée sur la potence (12) à pivotement autour d'une axe (17) ; des organes d'entrainement et de commande ; un second chariot (18) fixé au second tronçon (10) de l'organe (6), une seconde potence (19) ; une seconde tête (22) montée sur la seconde potence (19) ; les deux ensembles (25, 26) constitués respectivement par le chariot (11), la potence (19), la tête (22) d'une part, le chariot (18), la potence (19), la tête (24) d'autre part étant déplacés en direction verticale en synchronisme, dans des sens opposés l'un à l'autre.

FIG.1

# ROBOT

L'invention concerne un robot à structure cylindrique à cinq axes principaux de rotation verticaux, possédant deux bras mobiles équilibrés.

On connaît maintenant bien l'usage des robots ou manipulateurs dans de nombreuses industries, notamment dans celle de l'emballage (ce vocable comprenant l'emballage proprement dit mais aussi le suremballage, le conditionnement, la présentation, le stockage). Les robots peuvent être classés selon leur structure principale en robots à structure cartésienne (dont les robots portiques), ou à structure cylindrique (dont les robots "SCARA"), ou à structure polaire, ou à structure sphérique. Les robots "SCARA" ont une structure cylindrique et les principales rotations se font horizontalement (d'où les axes de rotation verticaux), par opposition à la structure sphérique dans laquelle les trois axes de rotation sont deux à deux perpendiculaires entre eux. De nombreuses firmes proposent de tels robots notamment les suivantes : ADEPT, DAINICHI, HITACHI, ASEA, COMAU, IBM, KNOSKE & GOSH, KURA, MANUTEC, SONY, BOSCH, STAUBLI, HIRATA. L'état de la technique général peut être illustré notamment par les documents suivants : EP 0016330, EP 0019596, EP 0058955, FR 2545406, FR 2092 747, DE 88 07313, FR 2536690, GB 2092090, DE 3 363 6602 et EP 0102 217.

Le document EP 0066014 concerne un manipulateur ayant deux bras rigides opposés de façon diamétrale par rapport à un axe par rapport auquel ils pivotent à 180°. L'objectif d'un tel manipulateur est de prendre et de déposer simultanément des pièces. Cependant un manipulateur de ce type à une structure bien spécifique totalement différente de celle d'un robot de type "SCARA". En effet, un tel robot "SCARA" à structure cylindrique a classiquement trois axes principaux de rotation verticaux et comprend une embase inférieure d'appui au sol ; une colonne verticale portée par l'embase et montée sur celle-ci à pivotement autour d'un premier axe vertical ; un organe support de liaison et d'entraînement substantiellement souple et inextensible, fermé en boucle sur lui-même, monté substantiellement tendu verticalement sur et le long de la colonne au moyen d'organes de renvoi respectivement supérieur et inférieur portés par la colonne ; un chariot fixé à un premier des deux tronçons verticaux de l'organe support et d'entraînement, monté à coulissement en direction verticale le long de la colonne; une potence s'étendant substantiellement horizontalement montée par sa première partie extrême sur le chariot à pivotement autour d'un deuxième axe vertical; une tête montée sur la potence à sa seconde partie extrême à pivotement autour d'un troisième axe vertical; et des organes d'entrainement et de commande. Compte-tenu que la potence est en porte à faux puisqu'elle est fixée au chariot par l'une de ses parties extrêmes, il s'exerce sur le chariot et l'organe support et d'entrainement des forces, d'autant plus importantes que le robot supporte, par sa tête, une masse d'autant plus grande. Il est considéré comme nécessaire d'équilibrer ces forces, en tout ou partie et, à cet effet, il est classiquement prévu, dans les robots "SCARA" un contrepoids situé sur le tronçon de l'organe support et d'entrainement opposé à celui auquel est associé le chariot. La masse de ce contrepoids est d'autant plus importante que son bras de levier est faible comparé à celui de l'ensemble chariot, potence, tête.

Ce problème d'équilibrage dans les robots a déjà été posé et a reçu également d'autres solutions techniques dans d'autres types de robots (voir documents FR 2533284 et FR 2532578).

Par ailleurs, les robots -et en particulier les robots "SCARA"- posent le problème général des cadences ou de la vitesse de fonctionnement. Ce problème est particulièrement crucial dans l'industrie de l'emballage (dans l'acception définie plus haut) étant donné que les autres ensembles ou sous ensembles des installations d'emballages comportant de tels robots ont vu leur cadence augmenter et que le robot peut risquer de limiter la cadence d'ensemble de l'installation.

L'invention a donc pour objectif de proposer un robot "SCARA" qui simultanément d'une part apporte une solution nouvelle et efficiente au problème de l'équilibrage et d'autre part ait une cadence de fonctionnement augmentée, grâce à une configuration à deux bras mobiles équilibrés.

De plus l'invention vise à atteindre un objectif sans augmenter substantiellement la complexité du robot.

A cet effet, l'invention propose un robot du type mentionné plus haut tel qu'il comporte également un second chariot fixé au second des deux tronçons verticaux du même organe support et d'entrainement, monté à coulissement en direction verticale le long de la même colonne; une seconde potence s'étendant substantiellement horizontalement montée par sa première partie extrême sur le second chariot à pivotement autour d'une quatrième axe vertical; une seconde tête montée sur la seconde potence à sa seconde partie extrême à pivotement autour d'un cinquième axe vertical; les deux ensembles constitués respectivement par le premier chariot, la première potence, la première tête d'une part, le second chariot, la seconde potence, la seconde tête d'autre part étant déplacés en direction verticale en synchronisme, dans des sens opposés l'un à l'autre, vers le haut ou le bas respectivement; chacun de ces deux ensembles équilibrant ou contribuant à équilibrer l'autre; les organes d'entraînement et de commande assurant les déplacements des deux ensembles de façon coordonnée.

Un tel robot est particulièrement bien adapté à des applications dans le domaine de l'emballage ainsi que défini plus haut, bien que ces applications ne soient par exclusives. Plus particulièrement, un tel robot peut-être intégré dans une installation de palettisation et/ou dépalettisation et plus généralement à la manipulation de produits divers. En outre, il peut être adapté à des opérations d'assemblage nécessitant la combinaison de mouvement des deux bras.

Les autres caractéristiques de l'invention résulteront de la description qui suivra en référence aux dessins annexés dans lesquels :

- La figure 1 est une vue schématique, en élévation d'un robot selon l'invention dans une de ses positions possibles.
- Les figures 2, 3, 4, 5 sont quatre vues schématiques, semblables à la figure 1 illustrant un mode de fonctionnement possible d'un tel robot selon l'invention dans une application possible.
- La figure 6 est une vue de dessus d'un tel robot selon l'invention dans une autre application possible.

L'invention concerne un robot de type "SCARA" à structure cylindrique et cinq axes principaux de rotation verticaux et deux bras mobiles équilibrés.

Un tel robot de type "SCARA" comprend une embase inférieure 1 d'appui au sol formant un socle pouvant avoir un contour de forme générale circulaire. Il comprend, en deuxième lieu, une colonne 2 verticale portée, par sa partie extrême inférieure 3 par l'embase 1. La colonne 2 est montée sur l'embase 1 à pivotement autour d'un premier axe vertical 4. La colonne 2 s'étend sur une certaine hauteur verticale entre sa partie extrême inférieure 3 et sa partie extrême supérieure 5. Cette hauteur est celle nécessaire au débattement de la tête du robot en sens vertical. Par exemple, la colonne 2 peut avoir une hauteur de l'ordre de 1 à 10 mètres. La colonne 2 constitue une structure portante, rigide, apte à encaisser les efforts résultants de la mise en oeuvre du robot. A cet effet, la colonne 2 est constituée de façon convenable de pièces profilées pouvant comporter des éléments de rigidification. La colonne 2, en tant que telle, est essentiellement creuse. Le premier axe vertical 4 constitue également l'axe vertical et longitudinal de la colonne 2.

Le robot comporte en troisième lieu un organe support de liaison et d'entraînement 6 qui présente comme caractéristique d'être substantiellement souple et inextensible, fermé en boucle sur lui-même, monté substantiellement tendu verticalement sur/et le long de la colonne 2 c'est-à-dire dans l'espace interne de celle-ci au moyen d'organes de renvoi respectivement supérieur 7 et inférieur 8 portés par la colonne 2. Dans un exemple typique de réalisation, l'organe support de liaison et d'entraînement 6 est une bande support de constitution et de largeur telles qu'elle puisse encaisser les efforts développés par le robot. Les organes de renvoi 7 et 8 sont des rouleaux d'axes 7a et 8a horizontaux portés par des paliers de la colonne 2. On entend par organe support de liaison et d'entraînement 6 substantiellement souple et inextensible le fait que l'organe 6 peut être soumis à des efforts de l'ordre de ceux mis en oeuvre lors du fonctionnement du robot. On entend par organe support de liaison et d'entraînement 6 fermé en boucle sur lui-même le fait qu'il puisse avoir une extrêmité initiale et une extrêmité finale associées entre elles de façon rigide. On entend par organe support de liaison et d'entraînement 6 monté substantiellement tendu verticalement le fait que entre les organes de renvoi 7 et 8, l'organe 6 est tendu, sans jeu significatif. Ainsi qu'on l'a déjà indiqué, l'organe support de liaison et d'entraînement 6 est essentiellement placé dans l'espace interne de la colonne 2, creuse à cet effet. L'organe support de liaison et d'entraînement 6 est partagé en deux tronçons s'étendant verticalement chacun entre les organes de renoi 7,8. Ces deux tronçons 9, 10 sont parallèles et opposés l'un à l'autre. On comprend qu'à la place de bandes support ou peut utiliser, en tant qu'organe support de liaison et d'entraînement 6, des chaînes sans fin, des câbles sans fin ou autre organe équivalent.

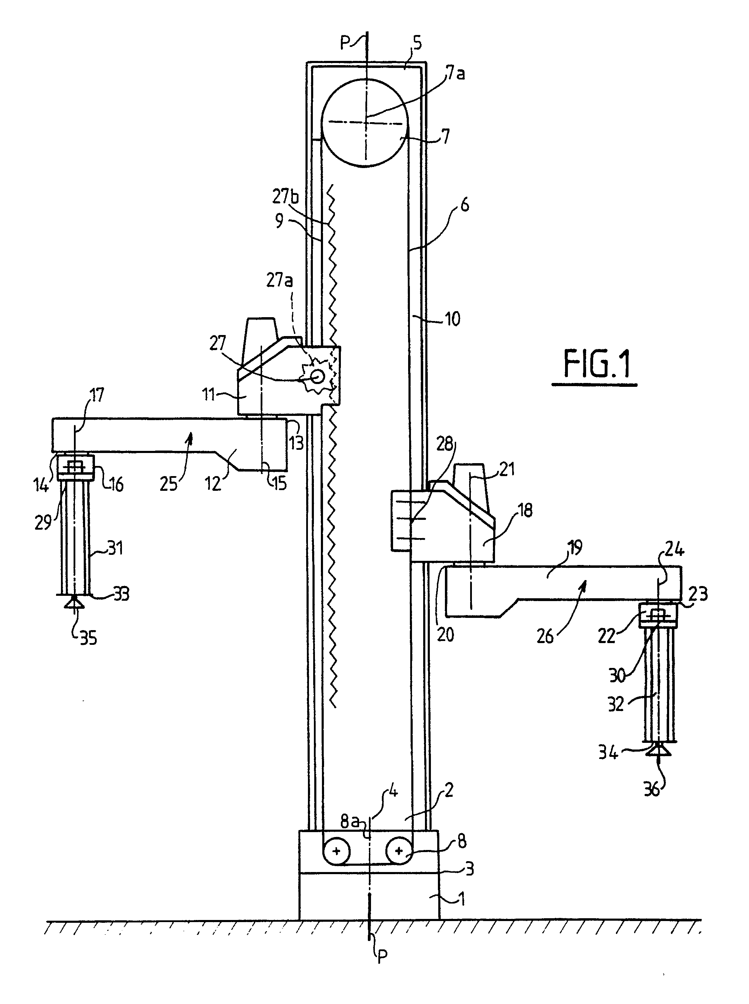

Dans la représentation figurée (figure 1) l'entraînement du chariot 11 est réalisé grâce à un pignon 27a du chariot 11, d'axe horizontal, motorisé, en prise sur une crémaillère 27b montée fixe verticalement sur et dans la colonne 2 ; la bande 6 étant jointée au niveau du bâti du chariot 11. En variante, la crémaillère est rendue motrice et, à cet effet elle est déformable. Dans un autre mode d'entraînement, au moins un des organes de renoi 7, 8 est motorisé de manière à être entraîné et assurer le déplacement de l'organe support et d'entraînement 6, les deux tronçons 9, et 10 étant déplacés en synchronisme et dans deux sens oposés l'un coulissant vers le haut tandis que l'autre coulisse vers le bas et inversement.

Le robot comporte en quatrième lieu le chariot 11 fixé à l'un des deux tronçons de l'organe support et d'entraînement 6. Ce premier chariot 11 est par exemple fixé au premier tronçon 9. Un tel chariot 11 présente un certain encombrement en sens vertical, en sens horizontal parallèlement aux axes 7a et 8a et en sens horizontal perpendiculairement au plan médian vertical P du robot défini par les axes 7a et 8a. Pour assurer une tenue convenable du chariot 11 sur l'organe support de liaison et d'entraînement 6, il peut être prévu plusieurs fixations échelonnées le long de l'organe 6. Cette fixation est préférentiellement amovible. Elle est par exemple réalisée au moyen de boulons. Pour permettre le montage du chariot 11, la colonne 2 comporte une ouverture s'étendant longitudinalement entre les deux parties extrêmes 3, 5. Le chariot 11 traverse cette ouverture. le cas échéant, il est prévu dans la colonne 2 des organes de guidage du chariot 11 coopérant avec des organes complémentaires de ce dernier. Par exemple, il peut-être prévu dans l'espace interne de la colonne 2 des rails verticaux sur lesquels roulent des galets d'axes horizontaux portés par le chariot 11. En variante, le guidage est assuré exclusivement par l'organe support de liaison et d'entraînement 6. Etant donné le montage du chariot 11 sur l'organe de support de liaison et d'entraînement 6, le chariot 11 est donc monté à coulissement en direction verticale le long de la colonne 2.

Le robot comporte en cinquième lieu une première potence 12 s'étendant substantiellement horizontalement et comportant deux parties extrêmes respectivement interne 13 et externe 14. La première potence 12 est montée sur le premier chariot 11 par sa partie extrême interne 13, de manière à pouvoir pivoter autour d'un deuxième axe vertical 15.

Le robot comporte en sixième lieu une première tête 16 montée sur la première potence 12 à sa partie extrême externe 14, de manière à pouvoir pivoter autour d'un troisième axe vertical 17.

La première potence 12 est constituée par une pièce rigide susceptible d'encaisser les efforts transmis entre la première tête 16 et le premier chariot 11 lors de la mise en oeuvre du robot. La première tête 16 est aménagée de manière à pouvoir recevoir des organes fonctionnels appropriés, ainsi qu'on le verra ultérieurement.

Le robot comporte en septième lieu des organes d'entraînement et de commande non spécifiquement représentés permettant de faire pivoter la colonne 2 sur l'embase 1 autour du premier axe 4 ; d'entraîner l'organe support de liaison et d'entraînement 6 les organes de renvoi 7, 8 pivotant autour de leurs axes 7a, 8a et/ou respectivement le pignon 27a ; de faire pivoter la première potence 12 par rapport au premier chariot 11 autour du deuxième axe 15 ; et, enfin de faire pivoter la première tête 16 par rapport à la première potence 12 autour du troisième axe 17. Ces organes d'entraînement et de commande comportent des moteurs, motoréducteurs, transmissions, moyens d'asservissement, automates programmables, commande numérique, etc... La première potence 12 est d'une longueur (en sens horizontal) adaptée à la distance devant être parcourue par la tête 8 en sens hozizontal.

Selon l'invention, le robot comporte également un second chariot 18, fixé au tronçon 10 du même organe support de liaison et d'entraînement 6. Ce second chariot 18 est monté à coulissement en direction verticale le long de la même colonne 2. Une seconde potence 19 s'étendant également substantiellement horizontalement est montée par sa partie extrême interne 20 sur le second chariot 18 à pivotement autour d'un quatrième axe vertical 21. Une seconde tête 22 est montée sur la seconde potence 19 à sa partie extrême externe 23 à pivotement autour d'un cinquième axe vertical 24.

Le robot comporte donc deux ensembles mobiles 25, 26 respectivement constitués le premier par le premier chariot 11, la première potence 12 et la première tête 16 avec les axes de pivotement 15 et 17 et, le second par le second chariot 18, la seconde potence 19 et la seconde tête 22 avec des axes de pivotement respectifs 21, 24. Ces deux ensembles sont portés par la même embase 1, la même colonne 2 et mettent en oeuvre le même organe support et d'entraînement 6 qui assure aussi leur liaison. Les organes d'entraînement et de commande sont également pour partie communs. En mouvement, les deux ensembles 25, 26 sont déplacés en direction verticle en synchronisme mais dans des sens opposés l'un à l'autre, vers le haut ou le bas respectivement grâce à l'organe 6.

Selon l'invention, chacun des ensembles 25, 26 équilibre ou contribue à équilibrer l'autre. De ce fait, le robot peut-être dépourvu sur l'une au moins et généralement sur les deux tronçons 9, 10 de l'organe support de liaison et d'entraînement 6 d'un contrepoids ayant exclusivement cette fonction ainsi que cela est connu dans les robots de type "SCARA" connus à ce jour.

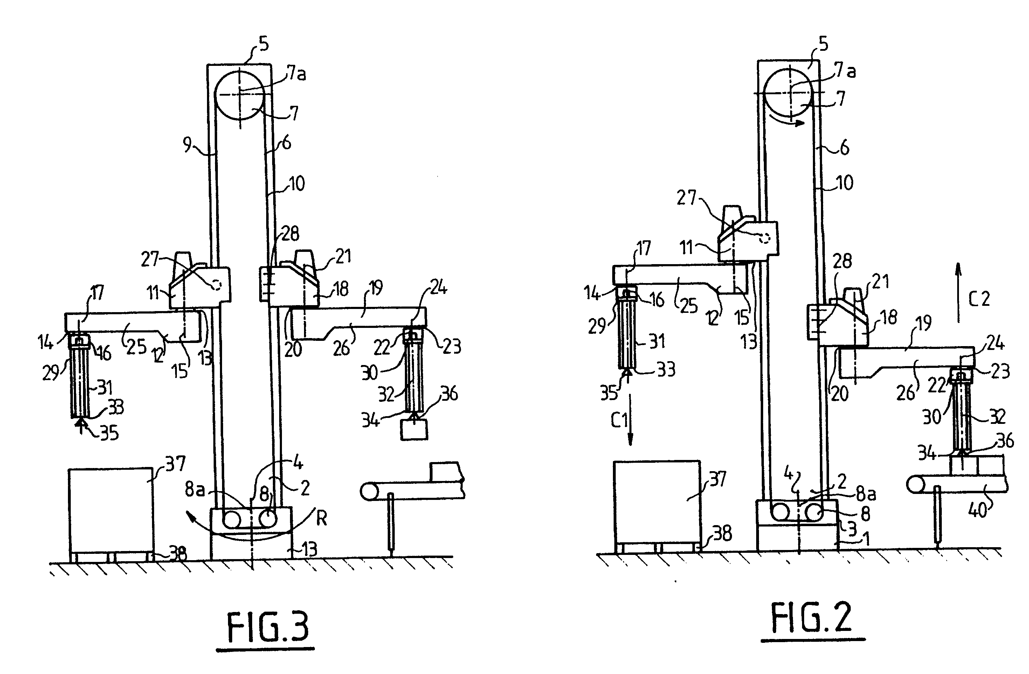

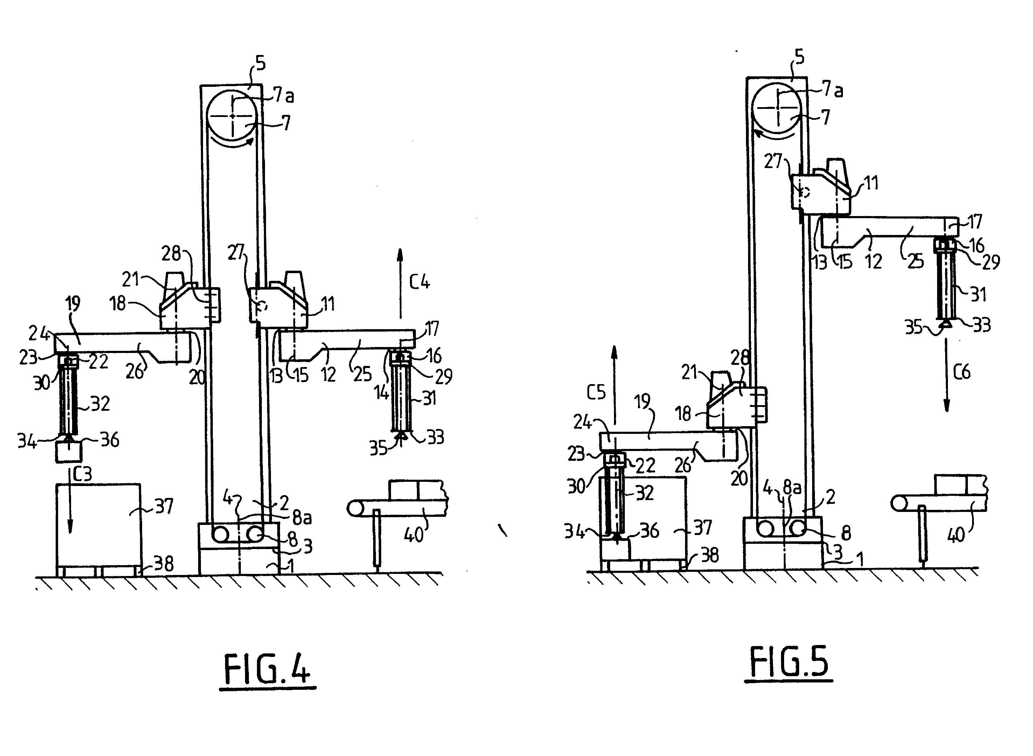

Les organes d'entraînement et de commande assurent les déplacements des deux ensembles 25, 26 de façon coordonnée. Les deux ensembles 25, 26 sont préférentiellement substantiellement semblables et en particulier les potences 12, 19 ont préférentiellement même longueur et les têtes 16, 22 sont agencées pour recevoir les mêmes organes fonctionnels. Les chariots 11, 18 sont déplacés chacun dans un plan médian vertical de coulissement perpendiculaire au plan P (c'est à dire le plan de la figure 1). Selon l'invention, ces deux plans médians verticaux de coulissement de deux chariots sont substantiellement confondus. Ainsi que cela résulte des figures (notamment les figures 3 et 4) les deux chariots 11, 18 sont fixés aux tronçons respectifs 9, 10 de l'organe support de liaison et d'entraînement 6 en étant localisé de manière à pouvoir se trouver substantiellement l'un en regard de l'autre dans la position médiane des tronçons en direction verticale. ou, ce qui revient au même (voir figure 5) l'un des chariots 11, 18 est situé vers la partie inférieure 3 de la colonne 2 tandis que l'autre est situé, au même moment, à la partie supérieur 5.

Préférentiellement, l'un au moins des deux chariots 11, 18, éventuellement les deux chariots, est monté sur le tronçon correspondant 9, 10 de l'organe support de liaison et d'entraînement 6 de façon réglable à coulissemnt en direction verticale de manière à permettre les réglages qui peuvent être rendus nécessaires.

Eventuellement, l'un au moins des deux chariots 11, 18 et généralement les deux, est monté sur le tronçon correspondant 9, 10 de l'organe support de liaison et d'entraînement 6 à pivotement autour d'un axe horizontal 27, 28 respectivement. Le pignon 27a lorsqu'il est prévu, est monté sur l'axe 27 et est rendu moteur grâce à un moteur ou un moto-réducteur et une liaison électrique appropriée (glissante ou souple). Dans le cas de la figure 1, l'entraînement du chariot 11 est réalisé grâce au pignon 27a et à la crémaillère 27b ainsi que décrit -en constituant ainsi un ensemble menant- et cet entraînement est transmis au chariot 18 par l'organe 6 qui assure la liaison avec le chariot 18, l'ensemble comportant le chariot 18 étant mené.

Dans une application possible, à l'une au moins des deux têtes 16, 22, et généralement aux deux têtes, est fixée par sa partie extrême supérieure 29, 30 une perche 31, 32 s'étendant substantiellement verticalement, et supportant, à sa partie extrême inférieure 33, 34 des moyens de saisie 35, 36 pouvant se trouver dans l'une des états actif ou inactif. De tels moyens de saisie 35, 36 peuvent être à fonctionnement commandé par les organes de commande et d'entraînement du robot. Un tel robot ainsi constitué permet avantageusement la manipulation d'objets et cela grâce aux moyens de saisie 35, 36.

Les moyens de saisie 35, 36 sont par exemple des moyens à succion aptes à permettre, notamment la saisie de caisses, sacs, contenants élémentaires, formats d'emballage ou objets constituant un tout unitaire à surface supérieure et cela par dessus. Ces moyens à succion peuvent être des ventouses ou des caissons aspirants. En variante, ces moyens de saisie sont constitués de pinces ou de doigts ou autres organes de saisie commandés électriquement, pneumatiquement ou mécaniquement.

L'invention concerne également, à titre d'application d'un tel robot, une installation d'emballage, de suremballage, de conditionnement, de présentation, de stockage de contenus, notamment des contenants élémentaires, dans ou sur des contenants ou des supports, notamment des caisses ou des palettes, comportant au moins un tel robot tel qu'il vient d'être décrit, au moins une amenée de contenus, au moins une amenée de contenants ou de suports, au moins une évacuation de contenus, contenants ou supports, et au moins un poste d'emballage, de suremballage, de conditionnement, de présentation, de stockage pour l'association des contenus, contenants ou suports. Dans une telle installation, le robot qui vient d'être décrit permet la manipulation des contenus, contenants on supports.

Plus particulèrement, l'invention concerne une installation de palettisation et/ou dépalettisation (figures 2 à 6), de contenants élémentaires 37, notamment des caisses ou des sacs, sur/ou d'une palette 38. La notion de palettisation et de dépalettisation telle qu'elle est envisagée ici doit être considérée au sens large. Une telle installation comprend des moyens d'amenée et d'évacuation des contenants élémentaires et. des palettes ainsi qu'un robot de manipulation des contenants élémentaires 37 tel qu'il vient d'être décrit.

L'invention concerne également les opérations de chargement/déchargement de produits, et d'assemblage de produits à plusieurs composants.

On se réfère maintenant aux figures 2 à 5 qui représentent une forme de réalisation possible d'une telle installation laquelle comprend un poste de palettisation/dépalettisation unique 39, un convoyeur 40 de contenants élémentaires 37 unique et un robot 41 placé entre eux deux de manière que les deux têtes puissent se trouver simultanément au droit du poste de palettisation/dépalettisation 39 et au droit du convoyeur 40. Dans un tel cas, la colonne 2 du robot est commandée à pivotement entre deux positions extrêmes sensiblement à 180° l'une de l'autre. L'une de ces deux positions étant représentée sur les figures 2 et 3 et l'autre sur les figures 4 et 5.

Pour la mise en oeuvre d'une telle installation, on amène une tête 16 au droit du poste de palettisation/dépalettisation 39 ou du convoyeur 40, dans une première position extrême de la colonne 2. On met en oeuvre les organes d'entraînement et de commande pour descendre cette même tête 16 et permettre son association fonctionnelle convenable avec le contenant élémentaire 37 convenable du poste de palettisation/dépalettisation 39 ou du convoyeur 40. On met en oeuvre les organes d'entraînement et de commande pour élever cette même tête 16 et la dégager du poste de palettisation/dépalettisation 39 ou du convoyeur 40. On amène cette tête 16 au droit du convoyeur 40 ou du poste de palettisation/dépalettisation 39 respectivement dans une seconde position extrême de la colonne 2. On met en oeuvre les organes d'entraînement et de commande pour descendre cette même tête 16 et permettre son association fonctionnelle convenable avec le contenant élémentaire 37 convenable du convoyeur 40 ou poste de palettisation/dépalettisation 39. On met en oeuvre les moyens d'entraînement et de commande pour élever cette même tête 16 et cela jusqu'à amener l'autre tête associée fonctionnellement avec un autre contenu élémentaire 37 convenable du poste de palettisation/dépalettisation 39 ou du convoyeur 40.

Si l'on se réfère maintenant au cas d'une installation de palettisation telle qu'elle est représentée sur la figures 2 à 5, le cycle de fonctionnement s'établit comme ceci : la première tête 16 vient saisir un contenant élémentaire 37 sur le conboyeur 40 et à cet effet, elle est abaissée pour que ses moyens de succion 35 puissent venir sur le contenant élémentaire 37. L'autre tête 22 est alors en position supérieure et ses moyens de succion 36 sont à l'état inactif. Les moyens de succion 35 sont mis en oeuvre et viennent saisir le contenant élémentaire 37. Ensuite, l'organe support de liaison et d'entraînement 6 est mis en oeuvre de manière à déplacer vers le haut la première tête 16 qui entraîne avec elle le contenant élémentaire 37 porté par les moyens de succion 35. Simultanément, la seconde tête 22 est déplacée verticalement et vers le bas. Ces mouvements en synchronisme, et en sens opposés des deux têtes 16, 22 sont représentés sur la figure 2 par les flèches C1 et C2. Le mouvement est poursuivi jusqu'à ce que les deux ensembles 25, 26 soient situés sensiblement au même niveau horisontal. Dans cette situation (figure 3) on fait pivoter la colonne 2 autour de l'axe 4 de 180° ce pivotement étant illustré sur la figure 3 par la flèche R. La première tête 16 qui était auparavant à l'aplomb du convoyeur 40 vient alors à l'aplomb du poste de palettisation 39. Inversement, la seconde tête 16 qui était auparavant à l'aplomb du poste de palettisation 39 vient se placer à l'aplomb du convoyeur 40. Il est alors possible d'entraîner l'organe support de liaison et d'entraînement 6 de manière que la première tête 16 soit déplacée verticalement et vers le bas (flèche C3 de la figure 4). Ce mouvement intervient jusqu'à ce que le contenant élémentaire 36 soit placé de façon convenable sur la palette 38. Les moyens de saisie 35 restés jusqu'à alors à l'état actif sont commandés pour passer à l'état inactif et libérer le contenant 37 précédemment saisi. Dans cette situation, les moyens de saisie 36 sont toujours à l'état inactif. Le mouvement de coulissement vertical descendant de la première tête 16 a comme conséquence un mouvement vertical ascendant de la seconde tête 22 illustré par la flèche C4 sur la figure 4. Lorsque le contenant élémentaire 37 est déposé sur la palette 38, le second chariot 18 est placé sur la colonne 2 plutôt vers le haut. A partir de cette situation (figure 5) l'organe support de liaison et d'entraînement 6 est commandé pour provoquer simultanément un mouvment de coulissement ascendant de la première tête 16 (flèche C5) et de coulissement descendant de la seconde tête 22 (flèche C6) et cela sur plus de la moitié de la course possible jusqu'à ce que la seconde tête 22 dont les moyens de succion 36 sont toujours à l'état inactif viennent prendre un nouveau contenant élémentaire se trouvant sur le convoyeur 40. Le cycle peut alors recommencer.

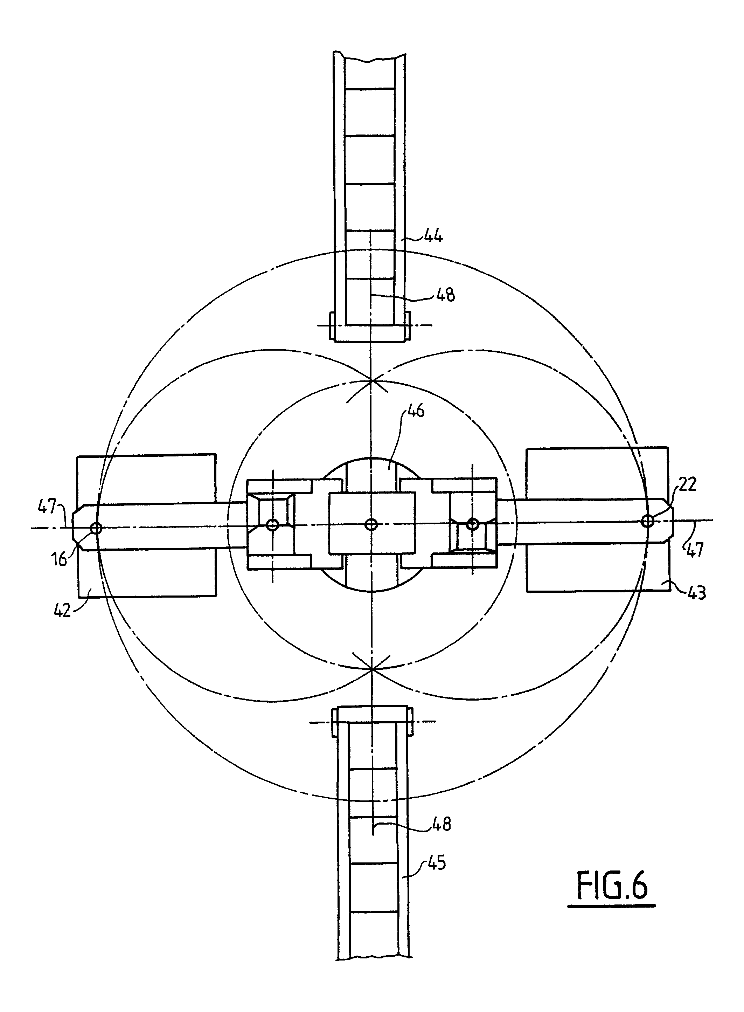

On se réfère maintenant à la figure 6 qui montre une autre variante de réalisation possible d'une installation de palettisation/dépalettisation qui comporte deux postes de palettisation/dépalettisation 42, 43 opposés l'un à l'autre, deux convoyeurs de contenants élémentaires 44, 45 également opposés l'un à l'autre et un robot de manipulation 46 placé entre eux de manière que les deux têtes 16, 22 du robot 46 puissent se trouver simultanément au droit de deux postes de palettisation/dépalettisation 42, 43 ou au droit des deux convoyeurs 44, 45. En particulier les deux postes de palettisation/dépalettisation 42, 43 s'étendant sur un axe 47 perpendiculaire à l'axe 48 sur lequel sont placés les deux convoyeurs 44, 45. Dans une telle situation, le robot 46 fonctionne avec sa colonne 2 pivotant à 90° autour de l'axe 4.

**Revendications**

1. Robot à structure cylindrique à axes principaux de rotation verticaux comprenant une embase inférieure (1) d'appui au sol; une colonne (2) verticale portée par l'embase (1) et montée sur celle-ci à pivotement autour d'un premier axe (4) vertical; un organe support de liaison et d'entrainement (6) substantiellement souple et inextensible, fermé en boucle sur lui-même, monté substantiellement tendu verticalement sur et le long de la colonne (2) au moyen d'organes de renvoi respectivement supérieur (7) et inférieur (8) portés par la colonne (2); un chariot (11) fixé à un premier des deux tronçons verticaux (9, 10) de l'organe support de liaison et d'entrainement, monté à coulissement en direction verticale le long de la colonne (2); une potence (12) s'étendant substantiellement horizontalement montée par sa première partie extrême (13) sur le chariot (11) à pivotement autour d'un deuxième axe vertical (15); une tête (16) montée sur la potence à sa seconde partie extrême (14) à pivotement autour d'un troisième axe vertical (17); et des organes d'entrainement et de commande caratérisé en ce qu'il comporte également un second chariot (18) fixé au second des deux tronçons (10) verticaux du même organe support de liaison et d'entrainement (6), monté à coulissement en direction verticale le long de la même colonne (2); une seconde potence (19) s'étendant substantiellement horizontalement montée par sa première partie extrême (20) sur le second chariot (18) à pivotement autour d'un quatrième axe vertical (21); une seconde tête (22) montée sur la seconde potence à sa seconde partie extrême (23) à pivotement autour d'un cinquième axe vertical (24); les deux ensembles (25, 26) constitués respectivement par le premier chariot (11), la première potence (19), la première tête (22) d'une part, le second chariot (18), la seconde potence (19), la seconde tête (24) d'autre part étant déplacés en direction verticale en synchronisme, dans des sens opposés l'un à l'autre, vers le haut ou le bas respectivement; chacun de ces deux ensembles (25, 26) équilibrant ou contribuant à équilibrer l'autre; les organes d'entraînement et de commande assurant les déplacement des deux ensembles (25, 26) de façon coordonnée.

2. Robot selon la revendication 1, caractérisé en ce qu'il est dépourvu, sur l'un au moins et généralement sur les deux tronçons (9,10) de l'organe support de liaison et d'entraînement (6), de contrepoids ayant exclusivement cette fonction.

3. Robot selon l'une quelconque des revendications 1 et 2, caractérisé en ce que les deux ensembles chariot (11, 18), potence (12, 19), tête (16, 22) sont substantiellement semblables.

4. Robot selon l'une quelconque des revendications 1 à 3, caractérisé en ce que les plans médians verticaux de coulissement des deux chariots sont substantiellement confondus.

5. Robot selon l'une quelconque des revendications 1 à 4, caractérisé en ce que les deux chariots (11, 18) sont fixés aux tronçons respectifs de l'organe support de liaison et d'entraînement (6) en étant localisés de manière à pouvoir se trouver substantiellement l'un en regard de l'autre subtantiellement dans la position médiane des tronçons (9, 10) en direction verticale.

6. Robot selon l'une quelconque des revendications 1 à 5, caractérisé en ce que l'un au moins des deux chariots (11, 18) est monté sur le tronçon correspondant (9 ou 10) de l'organe support de liaison et d'entraînement (6) de façon réglable à coulissement en direction verticale.

7. Robot selon l'une quelconque des revendications 1 à 6, caractérisé en ce que l'un au moins des deux chariots (11, 18), et généralement les deux, est monté sur le tronçon correspondant de l'organe support de liaison et d'entraînement à pivotement autour d'un axe horizontal.

8. Robot selon l'une quelconque des revendications 1 à 7, caractérisé en ce qu'à l'une au moins des deux têtes (16, 22), et généralement aux deux, est fixée, par sa partie extrême supérieure (29, 30), une perche (31, 32) s'étendant substantiellement verticalement, supportant, à sa partie extrême inférieure (33, 34) des moyens de saisie (35, 36) pouvant se trouver dans l'un des états actif ou inactif, à fonctionnement commandé par les organes de commande et d'entraînement, le robot étant un robot de manipulation d'objets.

9. Robot selon la revendication 8, caractérisé en ce que les moyens de saisie (35, 36) sont des moyens à succion aptes à permettre, notamment la saisie de caisses, sacs, contenants élémentaires, formats d'emballage ou objets constituant un tout unitaire à surface supérieure par dessus.

10. Robot selon l'une quelconque des revendications 1 à 9, caractérisé en ce que l'un des chariots (11) fait partie d'un ensemble menant, tandis que l'autre des chariots (18) fait partie d'un ensemble mené grâce à la liaison assurée par l'organe de support, liaison et entraînement (6).

11. Robot selon la revendication 10, caractérisé en ce que le chariot constituant l'ensemble menant est entraîne grâce à un pignon (27a) coopérant avec une crémaillère (27b) ou équivalent, l'un des deux étant motorisé.

12. Robot selon l'une quelconque des revendications 1 à 9, caractérisé en ce que l'organe de support, liaison et entraînement (6) est motorisé et entraîne les deux chariots (11, 18).

13. Installation d'emballage, de suremballage, de conditionnement, de présentation, de stockage de contenus, notamment des contenants élémentaires, dans/ou sur des contenants ou des supports, notamment des caisses ou des palettes, comportant au moins une amenée de contenus, au moins une amenée de contenants ou de supports, au moins une évacuation de contenus, contenants ou supports, au moins un poste d'emballage, de suremballage, de conditionnement, de présentation, de stockage pour l'association des contenus, contenants ou supports, au moins un robot de manipulation des contenus, contenants ou supports, caractérisée en ce que le robot est celui selon l'une quelconque des revendications 8 et 9.

14. Installation de palettisation et/ou dépalettisation (39) de contenants élémentaires (37), notamment des caisses ou des sacs, sur et/ou d'une palette (38) comprenant des moyens d'amenée et d'évacuation des contenants élémentaires (37) et des palettes (38) et au moins un robot de manipulation (41) des contenants élémentaires (37) caractérisé en ce que le robot (41) est celui selon l'une quelconque des revendications 8, 9.

15. Installation selon la revendication 14, caractérisée en ce qu'elle comporte un poste de palettisation/dépalettisation (39), convoyeur (40) de contenants élémentaires (37) et un robot de manipulation (41) placés entre eux de manière que les deux têtes (16, 22) du robot (41) puissent se trouver simultanément au droit du poste de palettisation/dépalettisation et du convoyeur (40).

16. Installation selon la revendication 15, caractérisée en ce que la colonne (2) du robot (41) est commandée à pivotement entre deux positions extrêmes sensiblement à 180° l'une de l'autre.

17. Procédé de mise en oeuvre d'une installation selon l'une quelconque des revendications 15 et 16, caractérisé en ce qu'on amène une tête au droit du poste de palettisation/dépalettisation (39) ou le convoyeur (40), dans une première position extrême de la colonne, on met en oeuvre les organes d'entraînement et de commande pour descendre cette même tête et permettre son association fonctionnelle convenable avec le contenant élémentaire (37) convenable du poste de palettisation/dépalettisation (39) ou le convoyeur (40), on met en oeuvre les organes d'entraînement et de commande pour élever cette même tête et la dégager du poste de palettisation/dépalettisation (39) ou le convoyeur (40), on amène cette tête au droit du convoyeur (40) ou du poste de palettisation/dépalettisation (39) respectivement dans une seconde position extrême de la colonne (2), on met en oeuvre les organes d'entraînement et de commande pour descendre cette même tête et permettre son association fonctionnelle convenable avec le contenant élémentaire (37) convenable ou convoyeur (40) ou poste de palettisation/dépalettisation (39), on met en oeuvre les moyens d'entraînement et de commande pour élever cette même tête et cela jusqu'à mener l'autre tête à être associée fonctionnellement avec un autre contenu élémentaire (37) convenable du poste de palettisation/dépalettisation (39), ou le convoyeur (40).

18. Installation selon la revendication 14, caractérisée en ce qu'elle comporte deux postes de palettisation/dépalettisation (42, 43) opposés l'un à l'autre, deux convoyeurs de contenants élémentaires (44, 45) opposés l'un à l'autre et un robot de manipulation (46) placé entre eux de manière que les deux têtes (16, 22) du robot (46) puissent se trouver simultanément au droit de deux postes de palettisation/dépalettisation (42, 43) ou au droit des deux convoyeurs (44, 45).

FIG.1

FIG.3

FIG.2

EP 0 422 983 A1

FIG.4

FIG.5

EP 0 422 983 A1

FIG.6

## Office européen des brevets

# RAPPORT DE RECHERCHE EUROPEENNE

Numéro de la demande

**EP 90 40 2698**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 092 747   (MEYER)<br>* le document en entier *<br>— — — | 1,11,14 | B<br>25 J 9/00<br>B 25 J 19/00 |
| A,D | DE-U-8 807 313   (BERGER)<br>* page 7, ligne 12 - page 9, ligne 28 *<br>— — — | 1-3 | B 25 J 9/04<br>B 65 G 61/00 |
| A,D | FR-A-2 536 690   (JUNGHEINRICH)<br>* page 8, lignes 24 - 33 *<br>— — — | 1 | |
| A,D | GB-A-2 092 090   (HULBRITT DEVELOPMENTS)<br>* page 2, lignes 2 - 13 * * page 3, lignes 67 - 74 *<br>— — — | 1,9,16 | |
| A,D | DE-A-3 636 602   (VE WISSENSCHAFTLICH-TECHNICHER BETRIEB KERAMIK)<br>* abrégé *<br>— — — | 1,18 | |
| A,D | EP-A-0 102 217   (IN TEST CORPORATION)<br>— — — — — | | |

### DOMAINES TECHNIQUES RECHERCHES (Int. Cl.5)

B 25 J
B 65 G
B 65 B

Le présent rapport de recherche a été établi pour toutes les revendications

| Lieu de la recherche | Date d'achèvement de la recherche | Examinateur |
|---|---|---|
| La Haye | 08 janvier 91 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant